# EUROPÄISCHE PATENTSCHRIFT

(11) **EP 2 525 122 B1**
(45) Veröffentlichungstag und Bekanntmachung des Hinweises auf die Patenterteilung: **28.08.2013**
(21) Anmeldenummer: 12168297.5
(22) Anmeldetag: 16.05.2012
(51) Int. Cl.: F16K 31/08, F16K 31/06, H01F 7/18

(54) **Elektromagnetventil sowie ein Verfahren zur Ansteuerung eines derartigen Elektromagnetventils**
Electromagnetic valve and method for controlling such a valve
Soupape électromagnétique et procédé de commande d'une telle soupape

(30) Priorität: 19.05.2011 DE 102011102041
(43) Veröffentlichungstag der Anmeldung: 21.11.2012
(73) Patentinhaber: Pierburg GmbH, 41460 Neuss (DE)
(72) Erfinder: Ludwig, Norbert, 41379 Brüggen (DE); Bürger, Frank, 52379 Langerwehe (DE)
(74) Vertreter: Patentanwälte ter Smitten Eberlein Rütten Partnerschaftsgesellschaft

(56) Entgegenhaltungen:
- DE-A1- 3 810 154
- DE-A1- 10 310 448
- DE-A1- 19 806 720
- DE-A1-102005 018 012
- JP-A- 2000 091 122
- JP-A- 2007 220 705
- US-A- 4 751 487
- US-A1- 2008 006 791

## Beschreibung

Die Erfindung betrifft ein Elektromagnetventil für eine Verbrennungskraftmaschine sowie ein Verfahren zur Ansteuerung für ein derartiges Elektromagnetventil. Das Elektromagnet mit einem Gehäuse, in dem zwei Spulen angeordnet sind, weist einen Anker auf, der zwischen zwei Endlagen beweglich gelagert ist und zumindest indirekt auf ein Ventilverschlussglied einwirkt, wobei eine Bestromung der Spulen eine Bewegung des Ankers in die erste oder in die zweite Endlage verursacht, wobei im unbestromten Zustand der Anker zumindest in einer Endlage durch die Wirkung eines Permanentmagneten fixiert ist.

Elektromagnetventile sind für viele unterschiedliche Anwendungsbereiche in Verbrennungskraftmaschinen hinlänglich bekannt. So werden Elektromagnetventile sowohl in pneumatischen als auch in hydraulischen Kreisen in Fahrzeugen eingesetzt, beispielsweise in Bremsanlagen, Bremssystemen oder auch Einspritzanlagen und sind dann als Auf-/Zu-Ventile ausgeführt.

Die DE 103 10 448 A1 beschreibt beispielsweise ein Elektromagnetventil, bei dem ein bewegbares Stellelement durch die Ansteuerung einer Spuleneinrichtung, bestehend aus zwei Spulen, in eine erste und eine zweite Anschlagposition bewegbar ist und zumindest abschnittsweise Permanentmagnetmittel aufweist, um in einem stromlosen Zustand das Stellelement in der jeweiligen Anschlagposition zu halten. Nachteilig ist bei dieser Lösung der deutlich höhere Schaltungsaufwand, da das Umpolen der Versorgungsspannung über eine zusätzliche H-Brücke erfolgen muss. Des Weiteren ist hierfür ein zusätzlicher Richtungssteuereingang notwendig.

Es ist daher Aufgabe der Erfindung, ein Elektromagnetventil bereitzustellen, das die vorgenannten Nachteile vermeidet und mit geringem Schaltungsaufwand auf günstige Weise herstellbar ist.

Die Aufgabe wird durch ein Elektromagnetventil mit zwei parallel geschalteten Spulen mit gegensinniger Wicklung gelöst, wobei der zweiten Spule ein erster Schaltkreis und der ersten Spulen ein zweiter Schaltkreis zugeordnet ist und wobei zumindest ein Schaltelement zur Lagerückmeldung des Ankers vorgesehen ist, wobei in Abhängigkeit eines Schaltsignals der Lagerückmeldung des Schaltelementes der jeweils zu bestromende Schaltkreis voreingestellt ist. Hierdurch wird insgesamt der schaltungstechnische Aufwand verringert, wodurch Kosten eingespart werden.

In einer vorteilhaften Ausführungsvariante ist das Schaltelement als ein Hall-Schalter ausgebildet, der die Endstellung des Ankers berührungslos detektiert und verschleißfrei arbeitet.

Vorzugsweise ist zwischen den beiden Spulen ein ringförmiges Lagerelement aus magnetisch leitendem Material angeordnet ist, wobei das Lagerelement je nach Endlage des Permanentmagneten mit dem Deckelelement oder dem Bodenelement eine geschlossene magnetische Rückschlusseinrichtung bildet, wodurch ein geschlossener magnetischer Kreis gebildet werden kann.

Besonders vorteilhaft ist es eine Steuerelektronik vorzusehen, die die Auswertung des Schaltsignals zur Lagerückmeldung des Schaltelementes bearbeitet. Je nach Anforderung kann das Schaltsignal auf einfache Art intern weiterverarbeitet werden.

Vorzugsweise weist die Steuerelektronik einen Logik-Baustein auf, der zwischen zwei logischen Schaltzuständen 0 und 1 unterscheidet. Hierbei ist ein erster logischer Schaltzustand 0 dem ersten Schaltkreis zugeordnet und ein zweiter logischer Schaltzustand 1 dem zweiten Schaltkreis zugeordnet. Hierdurch lässt sich sehr einfach der Stromweg voreinstellen, so dass zur Stromrichtungsänderung kein Umpolen oder weitere Maßnahmen notwendig sind.

Des Weiteren wird die Aufgabe durch ein Verfahren gelöst, bei dem eine Steuerelektronik zur Bewegung des Ankers vorgesehen ist, bei der in einem ersten Schritt durch das Anlegen einer Versorgungsspannung an zumindest einem Versorgungsspannungseingang und in Abhängigkeit des aktuellen Schaltsignals der Lagerückmeldung des Schaltelementes, das der zweiten Endlage, in der sich der Anker befindet, einen eindeutigen ersten Schaltzustand zuordnet, der durch den ersten Schaltzustand voreingestellte erste Schaltkreis und die dem ersten Schaltkreis zugeordnete zweiten Spule bestromt werden, worauf in einem nächsten Schritt der Anker in die erste Endlage bewegt wird, worauf das Schaltelement in einen zweiten Schaltzustand schaltet, und wodurch voreingestellt wird, dass ein erneutes Anlegen der Versorgungsspannung zu einer Bestromung des zweiten Schaltkreises führt, und in einem nächsten Schritt nach Abschalten der Versorgungsspannung der Anker in der ersten Endlage durch den Permanentmagneten fixiert wird, und daraufhin ein erneutes Anlegen der Versorgungsspannung an den zumindest einen Versorgungsspannungseingang in Abhängigkeit des aktuellen Schaltsignals der Lagerückmeldung des Schaltelementes, das der ersten Endlage des Ankers den eindeutigen zweiten Schaltzustand zuordnet, der durch den zweiten Schaltzustand voreingestellte zweite Schaltkreis und die dem zweiten Schaltkreis zugeordnete erste Spule bestromt werden, worauf der Anker sich in die zweite Endlage bewegt und das Schaltelement wieder in den ersten Schaltzustand schaltet, wodurch voreingestellt ist, dass das erneute Anlegen der Versorgungsspannung zu einer Bestromung des ersten Schaltkreises führt, und in einem weiteren Schritt nach der Abschaltung der Versorgungsspannung der Anker in der zweiten Endlage durch den Permanentmagneten fixiert wird.

Um den Anker nun jeweils von der ersten Endlage in die zweite Endlage und umgekehrt zu bewegen, werden die Schritte des Verfahrens wiederholt.

Durch das erfindungsgemäße Verfahren ist es nun möglich, ohne Umpolen der Versorgungsspannung und ohne zusätzlichen Richtungssteuereingang den Anker in eine jeweilige Endlage zu bewegen.

Im Folgenden wird unter Bezugnahme auf die Zeichnungen ein Ausführungsbeispiel der Erfindung näher erläutert.

Es zeigen:
Figur 1 eine schematische Schnittdarstellung eines Ausführungsbeispiels eines erfindungsgemäßen Elektromagnetventils und
Figur 2 eine Detailansicht einer Schaltung für das erfindungsgemäße Verfahren zur Ansteuerung eines Elektromagnetventils.

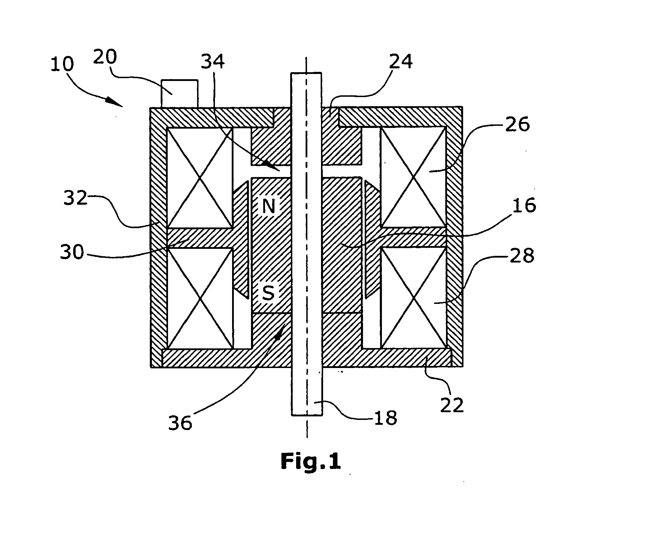

Die Figur 1 zeigt ein schematisch dargestelltes erfindungsgemäßes Elektromagnetventil 10 mit einem beweglichen Anker 18 aus magnetisch leitendem Material, der in einem Gehäuse 32 angeordnet ist. Das Gehäuse 32 weist ein Bodenelement 22 und ein Deckelelement 24 auf, wobei sowohl das Bodenelement 22 als auch das Deckelelement 24 eine Öffnung aufweisen, durch die der Anker 18 hindurch ragt und geführt sein kann. Der Anker 18 kann außerdem formschlüssig mit einem nach unten ragenden Ventilstößel verbunden sein und derart auf ihn einwirken, dass ein nicht weiter dargestelltes Ventilverschlussglied geöffnet oder geschlossen werden kann. Der Anker 18 trägt einen Permanentmagneten 16, wobei der Anker 18 bzw. der Permanentmagnet 16 zwischen einer ersten Endlage 34, die durch die Lage des Deckelelementes 24 bestimmt wird, und einer zweiten Endlage 36, die durch die Lage des Bodenelementes 22 bestimmt wird, bewegbar angeordnet sind.

Des Weiteren ist im Innern des Gehäuses 32 eine Spulenanordnung bestehend aus einer oberen ersten Spule 26 und einer zweiten unteren Spule 28 angeordnet und an der Innenwand des Gehäuses 18 befestigt. Zwischen den Spulen 26, 28 ist ein ringförmiges Lagerelement 30 aus magnetisch leitendem Material vorgesehen, das je nach Lage des Permanentmagneten 16 zusammen mit dem Deckelelement 24 oder dem Bodenelement 22 eine Rückschlusseinrichtung bildet.

Die Spulen 26, 28 sind gegensinnig gewickelt und parallel geschaltet, so dass mittels einer Steuerelektronik 20 eine Bestromung der ersten oberen Spule 26 oder der unteren zweiten Spule 28 eine Bewegung des Ankers 18 in eine erste Endlage 34 oder in eine zweite Endlage 36 verursacht, wobei im unbestromten Zustand der Anker 18 in beiden Endlage 34, 36, durch die Wirkung des Permanentmagneten 16 fixiert ist. Des Weiteren ist ein Schaltelement S1, insbesondere ein berührungslos arbeitender Hall-Schalter vorgesehen, der eine Lagerückmeldung des Ankers 18 in Form eines Schaltsignals generiert. In Figur 1 ist der Anker 18 durch die Wirkung des Permanentmagneten 16 in der zweiten Endlage 36 fixiert, auf diese Weise soll dich der Anker 18 auch im unbestromten Zustand in einer stabilen Endlage halten.

Durch die Steuerelektronik 20 des Elektromagnetventils 10 ist es nun möglich, ohne Umpolen der Versorgungsspannung den Anker 18 in die entgegengesetzte erste Endlage 34 zu fahren. Dabei wird durch das Anlegen einer Versorgungsspannung an die Versorgungsspannungseingänge 40 und in Abhängigkeit des aktuellen Schaltsignals der Lagerückmeldung des Schaltelementes werden der durch den ersten Schaltzustand voreingestellte erste Schaltkreis und die dem ersten Schaltkreis zugeordnete zweite Spule 28 bestromt. Daraufhin bewegt sich der Anker 18 entgegen der Kraft des Permanentmagneten 16 in die erste Endlage 34. Das Schaltelement schaltet daraufhin in einen zweiten Schaltzustand, wodurch voreingestellte wird, dass ein erneutes Anlegen der Versorgungsspannung zu einer Bestromung des zweiten Schaltkreises führt. Nach Abschaltung der Versorgungsspannung wird der Anker 18 in der ersten Endlage 34 durch den Permanentmagneten 16 fixiert. Ein erneutes Anlegen der Versorgungsspannung an den zumindest einen Versorgungsspannungseingang 40 verursacht daraufhin in Abhängigkeit des aktuellen Schaltsignals der Lagerückmeldung des Schaltelementes S1, der der ersten Endlage 34 des Ankers 18 den eindeutigen zweiten Schaltzustand zuordnet, dass der durch den zweiten Schaltzustand voreingestellte zweite Schaltkreis und die dem zweiten Schaltkreis zugeordnete erste Spule 26 bestromt. Hierdurch bewegt sich der Anker 18 zurück in die zweite Endlage 36, worauf das Schaltelement S1 wieder in den ersten Schaltzustand schaltet, wodurch voreingestellt ist, dass das erneute Anlegen der Versorgungsspannung zu einer Bestromung des ersten Schaltkreises führt. Nach Abschaltung der Versorgungsspannung ist der Anker 18 wieder in der zweiten Endlage 36, siehe Figur 1, durch den Permanentmagneten 16 fixiert wird.

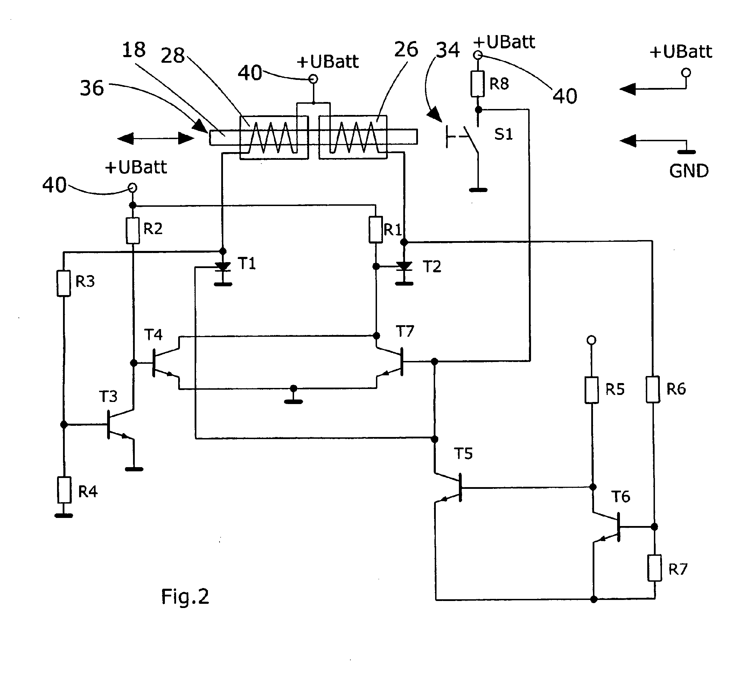

Die Figur 2 zeigt ein Ausführungsbeispiel einer Schaltung zur Ansteuerung eines erfindungsgemäßen Elektromagnetventils 10, wie beispielswiese in Figur 1 gezeigt. Eine derartige Schaltung könnte in der Steuerelektronik 20, die ebenfalls in Figur 1 gezeigt ist, vorgesehen sein.

Die Schaltung weist drei Versorgungsspannungseingänge 40 auf, wobei die drei Versorgungsspannungseingänge 40 über dieselbe Spannungsquelle versorgt werden und ein Netzwerk von unterschiedlichen elektronischen Bauteilen mit Spannung versorgen. Die Schaltung weist dabei die Widerstände R1 bis R8, die Thyristoren T1, T2, die Transistoren T3 bis T7 und das Schaltelement S1 auf, die über Leitungen elektrisch miteinander verbunden sind. Bei dem Schalter S1 kann es sich zum Beispiel um einen mechanischen Reed-Schalter oder um einen elektronischen, berührungslos arbeitenden Hall-Schalter handeln.

Des Weiteren ist in Figur 2 die Spulenanordnung bestehend aus der oberen Spule 26 und der unteren Spule 28 dargestellt. Innerhalb des o Innenumfangs der Spulen 26, 28 ist der Anker 18 translatorisch und horizontal beweglich gelagert. Wie in Figur 1 bereits erläutert, ist der Anker 18 dabei in eine erste oder in eine zweite Endlage 34, 36 bewegbar. In Figur 2 befindet sich der Anker 18 in der zweiten Endlage 36.

Die Schaltung der Steuerelektronik 20 weist außerdem einen Logik-Baustein auf, der zwischen zwei logischen Schaltzuständen 0 und 1 unterscheidet. Hierbei ist ein erster logischer Schaltzustand 0 dem ersten Schaltkreis zugeordnet und ein zweiter logischer Schaltzustand 1 dem zweiten Schaltkreis zugeordnet.

Durch das Anlegen einer Versorgungsspannung an die Versorgungsspannungseingänge 40 und in Abhängigkeit des aktuellen Schaltsignals, dass in der zweiten Endlage den ersten Schaltzustand = 0 aufweist, werden der durch den ersten Schaltzustand voreingestellte erste Schaltkreis bestromt. Der erste Schaltkreis sieht vor, dass der Transistor T7 über den Widerstand R8 durchschaltet und das Gate von dem Thyristor T2 auf Masse gelegt wird, wodurch ein Zünden des Thyristors T2 verhindert wird. Da der Thyristor T1 ebenfalls über den Widerstand R8 mit dem Gate verbunden ist, wird der Thyristor T1 gezündet. Folglich wird die dem ersten Schaltkreis zugeordnete zweite Spule 28 bestromt.

Dadurch wird der Anker 18, der aus permanentmagnetischen Material besteht, in Richtung des Schalters S1 bzw. in die erste Endlage 34 bewegt, wodurch dieser ausgelöst wird bzw. in einen zweiten Schaltzustand = 1 schaltet. Durch das Schalten bzw. das Schließen des Schalters S1 liegt Massepotenzial an dem Transistor T7, der folglich sperrt.

Nach dem Abschalten der Versorgungsspannung wird der Anker 18 in der ersten Endlage 34 durch den Permanentmagneten 16 fixiert.

Dadurch, dass der Transistor T4 ebenfalls an dem Gate des Thyristors T2 angeschlossen ist und der Transistor T4 über den Transistor T3 solange durchschaltet wie der Thyristor T1 noch gezündet ist, kann der Thyristor T2 in dieser Ausgangssituation immer noch nicht zünden und das obwohl der Widerstand R1 das Gate des Thyristors T2 mit Spannung versorgen kann.

Erst nach Abfallen der Versorgungsspannung sperrt der Thyristor T1 wieder und erst nach erneutem Anlegen der Versorgungsspannung gibt der Transistor T4 das Gate des Thyristors T2 zur Zündung frei. Hierdurch wird in Abhängigkeit des aktuellen Schaltsignals der Lagerückmeldung des Schaltelementes S1, das der ersten Endlage 34 des Ankers 18 den eindeutigen zweiten Schaltzustand = 1 zuordnet, der durch den zweiten Schaltzustand voreingestellte zweite Schaltkreis und die dem zweiten Schaltkreis zugeordnete erste Spule 26 daraufhin bestromt.

Durch die Bestromung der zweiten Spule bewegt sich der Anker 18 in die entgegengesetzte Richtung zurück in die zweite Endlage 36. Dadurch, dass der Schalter S1 wieder geöffnet ist, liegt an der Basis des Transistors T7 wieder eine Spannung an. Des Weiteren ist durch das Schalten voreingestellt, dass das erneute Anlegen der Versorgungsspannung zu einer Bestromung des ersten Schaltkreises führt.

Ein Durchschalten des Transistors T7 wird noch über den Transistor T5 verhindert, da der Transistor T5 über den Transistor T6 solange auf Masse geschaltet ist, wie der Thyristor T2 gezündet ist. Erst durch das Abschalten der Versorgungsspannung und das darauf erneute Anlegen der Versorgungsspannung gibt der Transistor T5 den Transistor T7 zum Zünden frei.

Um den Anker 18 nun wieder in die Richtung des Schalters S1 zu o bewegen, wiederholt sich der in Figur 1 bzw. 2 beschriebene Ablauf.

Selbstverständlich ist der Schutzumfang der Anmeldung nicht auf die beschriebenen Ausführungsbeispiele beschränkt. So können beispielsweise durch den Einsatz von zwei Schaltelementen, beispielsweise durch zwei Hall-Schalter, weitere Elektronikbauteile wegfallen und der Aufbau der Schaltung noch weiter vereinfacht werden. Ebenso könnten die Schaltelemente mechanisch ausgeführt sein. So sind je nach Anforderung ausgeführt Elektromagnetventile mit einer derartigen Steuerelektronik bzw. mit dem erfindungsgemäßen Verfahren betreibbar. Konstruktive Änderungen sind selbstverständlich durchführbar, ohne den Schutzbereich des Hauptanspruchs zu verlassen.

## Patentansprüche

1. Elektromagnetventil (10) für eine Verbrennungskraftmaschine mit einem Gehäuse (32), in dem zwei Spulen (26, 28) und ein Anker (18) angeordnet sind, wobei der Anker (18) zwischen zwei Endlagen (34, 36) beweglich gelagert ist und zumindest indirekt auf ein Ventilverschlussglied einwirkt, wobei eine Bestromung der Spulen (26, 28) eine Bewegung des Ankers (18) in die erste oder in die zweite Endlage (34, 36) verursacht, wobei im unbestromten Zustand der Anker (18) zumindest in einer Endlage (34, 36) durch einen Permanentmagneten (16) fixiert ist,
**dadurch gekennzeichnet, dass**
die Spulen (26, 28) parallel geschaltet sind und eine gegensinnige Wicklung aufweisen und der zweiten Spule (28) ein erster Schaltkreis und der ersten Spule (26) ein zweiter Schaltkreis zugeordnet ist und wobei zumindest ein Schaltelement (S1) zur Lagerückmeldung des Ankers (18) vorgesehen ist, jeweils in Abhängigkeit eines Schaltsignals der Lagerückmeldung des Schaltelementes (S1) der das derart schaltbar ist, dass zu bestromende Schaltkreis voreingestellt ist.

2. Elektromagnetventil (10) nach Anspruch 1,
**dadurch gekennzeichnet, dass** das Schaltelement (S1) als ein berührungslos arbeitender Hall-Schalter oder als ein Reed-Schalter ausgebildet ist, der die Endstellung des Ankers (18) detektiert.

3. Elektromagnetventil (10) nach Anspruch 1 oder 2,
**dadurch gekennzeichnet, dass** zwischen den Spulen (26, 28) ein ringförmiges Lagerelement (30) aus magnetisch leitendem Material angeordnet ist.

4. Elektromagnetventil (10) nach Anspruch 3,
**dadurch gekennzeichnet, dass** das Lagerelement (30) je nach Endlage (34, 36) des Permanentmagneten (16) mit dem Deckelelement (24) oder dem Bodenelement (22) eine geschlossene magnetische Rückschlusseinrichtung bildet.

5. Elektromagnetventil (10) nach einem der vorhergehenden Ansprüche, **dadurch gekennzeichnet, dass** eine Steuerelektronik (20) vorgesehen ist, die die Auswertung des Schaltsignals zur Lagerückmeldung des Schaltelementes (S1) bearbeitet.

6. Elektromagnetventil (10) nach Anspruch 5, **dadurch gekennzeichnet, dass** die Steuerelektronik (20) einen Logik-Baustein aufweist, der zwischen zwei logischen Schaltzuständen 0 und 1 unterscheidet.

7. Elektromagnetventil (10) nach Anspruch 6, **dadurch gekennzeichnet, dass** ein erster logischer Schaltzustand 0 dem ersten Schaltkreis zugeordnet ist und ein zweiter logischer Schaltzustand 1 dem zweiten Schaltkreis zugeordnet ist.

8. Verfahren zur Ansteuerung eines Elektromagnetventils (10) gemäß einem der vorhergehenden Ansprüche,
mit folgenden Schritten:
a) Anlegen einer Versorgungsspannung an zumindest einen Versorgungsspannungseingang (40).
b) In Abhängigkeit des aktuellen Schaltsignals der Lagerückmeldung des Schaltelementes (S1), das der zweiten Endlage (36), in der sich der Anker (18) befindet, einen eindeutigen ersten Schaltzustand zuordnet, werden der durch den ersten Schaltzustand voreingestellte erste Schaltkreis und die dem ersten Schaltkreis zugeordnete zweiten Spule (28) bestromt.
c) Bewegung des Ankers (18) in die erste Endlage (34), worauf das Schaltelement (S1) in einen zweiten Schaltzustand schaltet, wodurch voreingestellt wird, dass ein erneutes Anlegen der Versorgungsspannung zu einer Bestromung des zweiten Schaltkreises führt.
d) Abschalten der Versorgungsspannung, wobei der Anker (18) in der ersten Endlage (34) durch den Permanentmagneten (16) fixiert wird.
e) Erneutes Anlegen der Versorgungsspannung an den zumindest einen Versorgungsspannungseingang (40).
f) In Abhängigkeit des aktuellen Schaltsignals der Lagerückmeldung des Schaltelementes (S1), das der ersten Endlage (34) des Ankers (18) den eindeutigen zweiten Schaltzustand zuordnet, werden der durch den zweiten Schaltzustand voreingestellte zweite Schaltkreis und die dem zweiten Schaltkreis zugeordnete erste Spule (26) bestromt.
g) Bewegung des Ankers (18) in die zweite Endlage (36), worauf das Schaltelement (S1) wieder in den ersten Schaltzustand schaltet, wodurch voreingestellt ist, dass das erneute Anlegen der Versorgungsspannung zu einer Bestromung des ersten Schaltkreises führt.
h) Abschaltung der Versorgungsspannung, wobei der Anker (18) in der zweiten Endlage (36) durch den Permanentmagneten (16) fixiert wird.
i) Wiederholen der Schritte a -h.

## Claims

1. Solenoid valve (10) for an internal combustion engine, having a housing (32) in which two coils (26, 28) and an armature (18) are arranged, wherein the armature (18) is supported for movement between two end positions (34, 36) and acts at least indirectly on a valve closure member, wherein energizing the coils (26, 28) causes the armature (18) to move to the first or the second end position (34, 36), wherein, in the non-energized state, the armature (18) is fixed in at least one end position (34, 36) by a permanent magnet (16),
**characterized in that**
the coils (26, 28) are connected in parallel and have oppositely directed windings, and the second coil (28) has a first circuit assigned thereto and the first coil (26) has a second circuit assigned thereto, and wherein at least one switching element (S1) for feedback on the position of the armature (18) is provided, which element is switchable such that the respective circuit to be energized is preset in dependence on a switching signal of the position feedback from the switching element (S1).

2. Solenoid valve (10) of claim 1, **characterized in that** the switching element (S1) is configured as a contactlessly operating Hall switch or as a Reed switch detecting the end position of the armature (18).

3. Solenoid valve (10) of claim 1 or 2, **characterized in that** an annular bearing element (30) of magnetically conductive material is arranged between the coils (26, 28).

4. Solenoid valve (10) of claim 3, **characterized in that**, depending on the end position (34, 36) of the permanent magnet (16), the bearing element (30) forms a closed magnetic return path means with the cover element (24) or the bottom element (22).

5. Solenoid valve (10) of one of the preceding claims, **characterized in that** control electronics (20) are provided that process the evaluation of the switching signal for the position feedback from the switching element (S1).

6. Solenoid valve (10) of claim 5, **characterized in that** the control electronics (20) comprises a logical unit that differentiates between two logical switching states 0 and 1.

7. Solenoid valve (10) of claim 6, **characterized in that** a first logical switching state 0 is assigned to the first circuit and a second logical switching state 1 is assigned to the second circuit.

8. Method for controlling a solenoid valve (10) of one of the preceding claims, comprising the following steps:
a) applying a supply voltage to at least one supply voltage input (40),
b) depending on the current switching signal for the position feedback from the switching element (S1), which assigns an unambiguous first switching state to the second end position (36) of the armature (18), energizing the first circuit preset by the first switching state and the second coil (28) assigned to the first circuit;
c) moving the armature (18) to the first end position (34), whereupon the switching element (S1) switches to a second switching state, whereby it is preset that a re-application of the supply voltage leads to the energization of the second circuit;
d) switching off the supply voltage, the armature (18) being fixed in the first end position (34) by the permanent magnet (16);
e) re-application of the supply voltage to the at least one supply voltage input (40),
f) depending on the current switching signal for the position feedback from the switching element (S1), which assigns an unambiguous second switching state to the first end position (34) of the armature (18), energizing the second circuit preset by the second switching state and the first coil (26) assigned to the second circuit;
g) moving the armature (18) to the second end position (34), whereupon the switching element (S1) switches back to a first switching state, whereby it is preset that a re-application of the supply voltage leads to the energization of the first circuit;
h) switching off the supply voltage, the armature (18) being fixed in the second end position (36) by the permanent magnet (16);
i) repeating the steps a - h.

## Revendications

1. Soupape électromagnétique (10) pour moteur à combustion interne, comprenant un boitier (32) dans lequel sont disposées deux bobines (16, 28) et une armature (18), ladite armature (18) étant supportée en rotation entre deux positions d'extrémité (34, 36) et agissant, au moins indirectement, sur un élément de fermeture de soupape, l'alimentation en courant des bobines (26, 28) provoquant un mouvement de ladite armature (18) dans la première ou la deuxième position d'extrémité (34, 36), ladite armature (18), en état non-alimentée, étant fixée par un aimant permanent (16) au moins dans une des position d'extrémité (34, 36),
**caractérisée en ce que**
les bobines (26, 28) sont connectées en parallèle et présentent des enroulements de sens contraire, et qu'un premier circuit est associé à la deuxième bobine (28) et un deuxième circuit est associé à la première bobine (26), et qu'au moins un élément de commutation (S1) pour le retour de position de ladite armature (18) est prévu, qui est commutable des sorte que le circuit à alimenter en courant est prédéfini, respectivement, en fonction d'un signal de retour de position dudit élément de commutation (S1).

2. Soupape électromagnétique (10) selon la revendication 1, **caractérisée en ce que** ledit élément de commutation (S1) est réalisé sou forme d'un commutateur du type Hall fonctionnant sans contact ou sous forme d'un commutateur Reed détectant la position d'extrémité de ladite armature (18).

3. Soupape électromagnétique (10) selon la revendication 1 ou 2, **caractérisée en ce qu'**un élément de support (30) annulaire en un matériau magnétiquement conducteur est disposé entre lesdites bobines (26, 28).

4. Soupape électromagnétique (10) selon la revendication 3, **caractérisée en ce que**, dépendant de la position d'extrémité (34, 36) dudit aimant permanent (16), ledit élément de support (30) forme un moyen de reflux magnétique fermé avec l'élément de couvercle (24) ou ledit élément de fond (22).

5. Soupape électromagnétique (10) selon l'une quelconque des revendications précédentes, **caractérisée en ce qu'**une électronique de commande (20) est prévue qui traite l'évaluation dudit signal de retour de position dudit élément de commutation (S1).

6. Soupape électromagnétique (10) selon la revendication 5, **caractérisée en ce que** ladite électronique de commande (20) comprend un composant logique qui distingue entre deux états de commutation logiques 0 et 1.

7. Soupape électromagnétique (10) selon la revendication 6, **caractérisée en ce qu'**un premier état de commutation logique 0 est associé au premier circuit et un deuxième état de commutation logique 1 est associé au deuxième circuit.

8. Procédé de commande d'une soupape électromagnétique (10) selon l'une quelconque des revendications précédentes, comprenant les étapes suivantes:
a) application de la tension d'alimentation à au moins une entrée de tension d'alimentation (40),
b) en fonction du signal actuel de commutation de retour de position dudit élément de commutation (S1), associant un premier état de commutation univoque à la deuxième position d'extrémité (36) dans laquelle se trouve ladite armature (18), alimentation en courant dudit premier circuit prédéfini par ledit premier état de commutation et de ladite deuxième bobine (28) associée audit premier circuit,
c) déplacement de ladite armature (18) dans la première position d'extrémité (34), ledit élément de commutation (S1) commutant ensuite dans un deuxième état de commutation, ainsi prédéfinissant qu'en cas d'une nouvelle application de la tension d'alimentation, le deuxième circuit sera alimenter en courant,
d) coupure de la tension d'alimentation, ladite armature (18) étant fixée dans la première position d'extrémité (34) par ledit aimant permanent (16),
e) nouvelle application de la tension d'alimentation à ladite au moins une entrée de tension d'alimentation (40),
f) en fonction du signal actuel de commutation de retour de position dudit élément de commutation (S1), associant un deuxième état de commutation univoque à la première position d'extrémité (34) dans laquelle se trouve ladite armature (18), alimentation en courant dudit deuxième circuit prédéfini par ledit deuxième état de commutation et de ladite première bobine (26) associée audit deuxième circuit,
g) déplacement de ladite armature (18) dans la deuxième position d'extrémité (36), ledit élément de commutation (S1) ensuite commutant de nouveau dans le premier état de commutation, ainsi prédéfinissant qu'en cas d'une nouvelle application de la tension d'alimentation, le premier circuit sera alimenter en courant,
h) coupure de la tension d'alimentation, ladite armature (18) étant fixée dans la deuxième position d'extrémité (36) par ledit aimant permanent (16),
i) répétition des étapes a - h.
